# EUROPÄISCHE PATENTANMELDUNG

(11) **EP 3 269 592 A1**
(43) Veröffentlichungstag der Anmeldung: **17.01.2018**
(21) Anmeldenummer: 17180572.4
(22) Anmeldetag: 10.07.2017
(51) Int. Cl.: B60P 3/079

(54) **GURTHAKENEINHEIT**

(30) Priorität: 13.07.2016 DE 202016103771 U
(71) Anmelder: FGS GmbH - Fahrzeug - und AI-Systeme, 78355 Hohenfels - Selgetsweiler (DE)
(72) Erfinder: Reiß, Martin, 78355 Hohenfels (DE)
(74) Vertreter: Daub, Thomas

(57) **Zusammenfassung**

Die Erfindung geht aus von einer Gurthakeneinheit (1a, 1b, 1b') mit zumindest zwei beabstandeten Haken (10a, 12a, 10b, 12b, 10c, 12c) zur Aufnahme von Spannkräften eines Gurtes (14).

## Beschreibung

### Stand der Technik

Es sind bereits Gurthakeneinheiten bekannt, die eine Gurtanbindungseinheit und einen Haken zur Aufnahme von Spannkräften aufweisen. Dabei wird die bekannte Gurthakeneinheit von einem einteiligen Stahldraht gebildet. Der Stahldraht bildet mit einer schlaufenartigen Ausformung die Gurtanbindungseinheit und mit seinen zwei aneinander liegenden Enden den einzelnen Haken.

### Vorteile der Erfindung

Es wird eine Gurthakeneinheit mit zumindest zwei beabstandeten Haken zur Aufnahme von Spannkräften eines Gurts vorgeschlagen. Unter "beabstandet" soll dabei insbesondere verstanden werden, dass die Haken geeignet und insbesondere dazu vorgesehen sind, in zwei beabstandete Löcher bzw. Ausnehmungen eingeführt zu werden, und zwar in der Weise, dass in einem Freiraum zwischen den Haken ein sich zwischen den Ausnehmungen befindender Materialbereich sich zwischen die Haken einfügen kann. Die Haken weisen zwischen vorgesehenen Anlageflächen zur Anlage an die Ausnehmungen begrenzende Ränder einen kürzesten Abstand von mindestens 10 mm, vorzugsweise von mindestens 20 mm und besonders bevorzugt von mindestens 30 mm auf. Der Hakenabstand ist dabei vorzugsweise auf einen vorliegenden Lochabstand eines Lochblechs und/oder insbesondere auf einen vorliegenden Lochabstand eines Strangpressprofils mit Löchern ausgelegt, an welchem die Gurthakeneinheit befestigt werden soll, wobei das Strangpressprofil vorzugsweise aus Aluminium hergestellt ist. Unter einer Gurthakeneinheit soll eine insbesondere ohne Zwischenschaltung des daran anzubindenden Gurtes zusammenhängende Einheit verstanden werden, wie insbesondere eine zusammenhängende Metalleinheit. Insbesondere sollen darunter nicht zwei differierende Einheiten verstanden werden, wie beispielsweise zwei differierende Haken, die materialmäßig ausschließlich über den Gurt verbunden sind.

Durch eine entsprechende Ausgestaltung kann insbesondere eine vorteilhafte Übertragung von großen Spannkräften erreicht werden. Eine zu übertragende Spannkraft kann insbesondere vorteilhaft an zumindest zwei differierenden Lochbegrenzungen abgestützt werden, wodurch gegenüber einer Abstützung an nur einer einzelnen Lochbegrenzung vorteilhaft kleinere Flächenpressungen und kleinere Materialbelastungen, insbesondere an einem die Löcher aufweisenden Strangpressprofil, erzielt werden können.

Die Gurthakeneinheit kann dabei für verschiedene Anwendungen ausgelegt sein. Besonders vorteilhaft ist die Gurthakeneinheit jedoch als Kraftfahrzeugbefestigungsgurthakeneinheit ausgebildet. Dabei soll unter einer Kraftfahrzeugbefestigungsgurthakeneinheit eine Einheit verstanden werden, die gezielt dazu ausgelegt und ausgestattet ist, ein Kraftfahrzeug auf einer Ladefläche eines Lastkraftwagens zu befestigen, und zwar vorzugsweise auf einer Ladefläche mit einem Lochblech.

Die Haken können, in Spannrichtung betrachtet, zumindest teilweise hintereinander angeordnet sein, so dass diese, insbesondere in Spannrichtung betrachtet, in hintereinander liegende Löcher eingehakt werden können und/oder besonders vorteilhaft, in Spannrichtung betrachtet, zumindest teilweise nebeneinander angeordnet sein, so dass diese, insbesondere in Spannrichtung betrachtet, in nebeneinander liegende Löcher eingehakt werden können. Unter einer "Spannrichtung" soll insbesondere eine Richtung verstanden werden, in der in zumindest einem ordnungsgemäß montierten Zustand der Gurthakeneinheit Hauptspannkräfte wirken. Durch eine entsprechende Ausgestaltung kann ein hoher Bedienkomfort bzw. ein einfaches Einhaken der Haken sichergestellt werden.

In einer weiteren Ausgestaltung wird vorgeschlagen, dass die Haken einen Abstand, insbesondere quer zur Spannrichtung, größer als 40 mm und vorteilhaft größer als 45 mm und insbesondere vorteilhaft kleiner als 60 mm und besonders vorteilhaft kleiner als 55 mm aufweisen. Unter einem "Abstand" soll dabei insbesondere eine kürzeste Wegstrecke zwischen zwei Anlageflächen der Haken zur Anlage an die Ausnehmungen begrenzende Ränder verstanden werden. Durch eine entsprechende Ausgestaltung kann eine vorteilhafte Kraftverteilung erreicht werden und insbesondere kann die Gurthakeneinheit vorteilhaft bei Standardlochblechen und insbesondere bei Standardstrangpressprofilen mit Löchern eingesetzt werden.

Eine vorteilhafte Kraftverteilung kann ferner erreicht werden, wenn zumindest einer der Haken eine Breite größer als 25 mm und besonders bevorzugt größer als 30 mm und insbesondere eine Breite kleiner als 45 mm und besonders bevorzugt eine Breite kleiner als 40 mm aufweist. Dabei soll unter einer Breite insbesondere eine Erstreckung quer zur Spannrichtung verstanden werden.

Ferner wird vorgeschlagen, dass die Gurthakeneinheit eine Gurtanbindungseinheit und zumindest eine Lagereinheit aufweist, über die zumindest einer der Haken und die Gurtanbindungseinheit relativ zueinander beweglich verbunden sind. Unter einer "Gurtanbindungseinheit" soll dabei insbesondere eine Einheit verstanden werden, die eine Gurtanlagefläche ausbildet. Durch eine entsprechende Ausgestaltung kann eine flexible Einstellung der Gurtanbindungseinheit relativ zu zumindest einem Haken und damit zum Gurt bei einem gleichzeitig vorteilhaften Kraftfluss erreicht werden, und zwar insbesondere, wenn die Lagereinheit zumindest ein Gelenk aufweist, über das die Gurtanbindungseinheit und der zumindest eine Haken schwenkbar verbunden sind. Vorzugsweise weist das Gelenk dabei eine Schwenkachse auf, die zumindest im Wesentlichen senkrecht zur Spannrichtung verläuft. Unter "zumindest im Wesentlichen" soll dabei insbesondere verstanden werden, dass die Schwenkachse eine Abweichung zu einer Senkrechten zur Spannrichtung kleiner als 30° und insbesondere kleiner als 20° aufweist.

Vorzugsweise ist auch denkbar, dass die zumindest zwei Haken relativ zueinander beweglich gelagert sind.

Die Gurthakeneinheit kann aus verschiedenen, dem Fachmann als sinnvoll erscheinenden Materialien mit verschiedenen, dem Fachmann als sinnvoll erscheinenden Grundformen gebildet sein, beispielsweise kann die Gurthakeneinheit zumindest teilweise aus einem Metall, einem Kunststoff und/oder einem Mehrkomponentenmaterial, wie vorzugsweise aus einem mit einer weiteren Komponente verstärkten Kunststoff, wie beispielsweise einem glasfaserverstärktem Kunststoff hergestellt sein. Die Grundform des Materials kann drahtförmig ausgebildet sein, d.h. insbesondere mit zumindest einer runden Querschnittsfläche, insbesondere auch im Bereich zumindest eines Hakens. Besonders vorteilhaft ist die Gurthakeneinheit jedoch zumindest teilweise aus einem Flachmaterial gebildet. Dabei soll unter einem "Flachmaterial" insbesondere ein Material mit einer Grundform verstanden werden, die zumindest eine Querschnittfläche aufweist, die insbesondere eine Flächennormale aufweist, die zumindest im Wesentlichen, d.h. mit einer Abweichung kleiner 10° und vorteilhaft kleiner 5°, parallel zur Spannrichtung verläuft, wobei die Querschnittsfläche eine Haupterstreckung aufweist, die mindestens doppelt so groß ist wie eine Erstreckung senkrecht zur Haupterstreckung.

Durch eine entsprechende Ausgestaltung können eine besonders kostengünstige Herstellung und wiederum ein besonders vorteilhafter Kraftfluss und eine besonders vorteilhafte Kraftverteilung, insbesondere auch innerhalb der Gurthakeneinheit, erreicht werden.

Ferner wird vorgeschlagen, dass die Gurthakeneinheit zumindest teilweise mit einer Materialstärke größer als 2,5 mm und vorzugsweise größer als 3,5 mm ausgebildet ist, und vorzugsweise mit einer Materialstärke kleiner als 5,5 mm und besonders bevorzugt kleiner als 4,5 mm, wodurch insbesondere ein besonders vorteilhafter Kompromiss zwischen Gewicht, Handlichkeit und Belastbarkeit erreicht werden kann.

Dasselbe gilt, wenn die Gurthakeneinheit zumindest teilweise aus einem Material mit einer Zugfestigkeit von zumindest 470 N/mm² und ganz besonders bevorzugt von zumindest 550 N/mm² gebildet ist.

Weist die Gurthakeneinheit zumindest eine Gurtanbindungseinheit mit zumindest einer zumindest teilweise abgerundeten Gurtanlagefläche auf, die in zumindest einem Bereich einen Durchmesser größer als 11 mm aufweist, können vorteilhaft Reibungsverluste zwischen einem Gurt und der Gurtanbindungseinheit auf ein vorteilhaftes Maß reduziert werden. Vorzugsweise ist der Durchmesser zudem kleiner als 15 mm, wodurch eine vorteilhafte Bauform erreicht werden kann.

Ferner können Reibungsverluste zwischen der Gurthakeneinheit und einem Gurt reduziert werden, wenn die Gurthakeneinheit zumindest eine Gurtanbindungseinheit aufweist, die ein beweglich gelagertes, insbesondere drehbar gelagertes Gurtanbindungselement aufweist. Dabei soll unter einem "Gurtanbindungselement" insbesondere ein Element verstanden werden, welches eine Gurtanlagefläche ausbildet. Die Gurtanbindungseinheit kann dabei ein Gleitlager und/oder auch ein Wälzlager aufweisen, über das das Gurtanbindungselement beweglich gelagert ist.

In einer weiteren Ausgestaltung wird vorgeschlagen, dass die Gurthakeneinheit zumindest eine Gurtanbindungseinheit umfasst, die zumindest eine wenigstens teilweise in einem Umformprozess, wie insbesondere in einem Biegeprozess, gebildete Gurtanlagefläche aufweist, wodurch Herstellungskosten eingespart werden können. Besonders bevorzugt werden dabei die Gurtanbindungseinheit und insbesondere die Gurtanlagefläche zumindest teilweise von einem Stanzbiegeteil gebildet.

Ferner wird ein System mit zumindest einem Gurt und zumindest einer erfindungsgemäßen Gurthakeneinheit vorgeschlagen, wodurch der Gurt und die Gurthakeneinheit besonders vorteilhaft aufeinander abgestimmt werden können.

Ist der Gurt auf eine Spannkraft größer als 15 kN und vorzugsweise auf eine Spannkraft größer als 20 kN ausgelegt, kann eine besonders sichere Befestigung erzielt werden, und zwar insbesondere von Kraftfahrzeugen auf einem Lastkraftwagen.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein System mit Gurthakeneinheiten und einem Gurt im montierten Zustand zur Befestigung eines Kraftfahrzeugrads,
- Fig. 2.: eine erste Gurthakeneinheit des Systems aus Fig. 1 in einer dreidimensionalen Ansicht,
- Fig. 3: die Gurthakeneinheit aus Figur 2 in einer Seitenansicht,
- Fig. 4: die Gurthakeneinheit aus Figur 2 in einer Draufsicht,
- Fig. 5: die Gurthakeneinheit aus Figur 2 in einer Frontansicht,
- Fig. 6: eine weitere Gurthakeneinheit des Systems in einer dreidimensionalen Ansicht,
- Fig. 7: die Gurthakeneinheit aus Figur 6 in einer Seitenansicht,
- Fig. 8: die Gurthakeneinheit aus Figur 6 in einer Frontansicht,
- Fig. 9: eine schematische Darstellung einer weiteren alternativen Gurthakeneinheit in einer Seitenansicht und
- Fig. 10: eine Draufsicht der Gurthakeneinheit aus Figur 9 noch als Halbzeug.

### Beschreibung der Ausführungsbeispiele

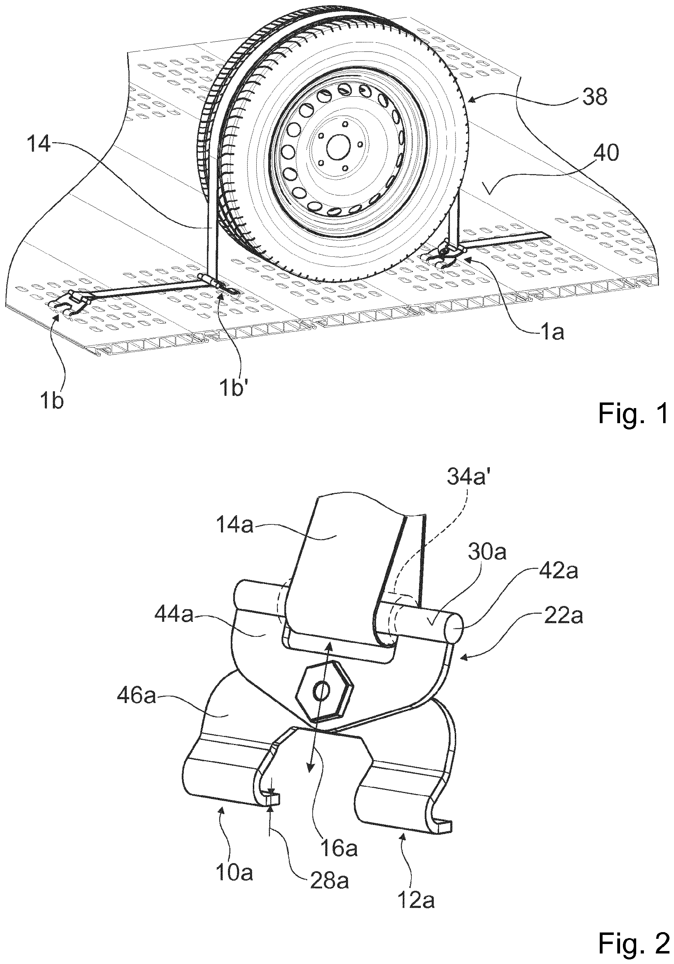

Figur 1 zeigt ein System mit einem Gurt 14 und insgesamt drei Gurthakeneinheiten 1a, 1b, 1b'. Das System ist in einem montierten Zustand dargestellt, und zwar zur Befestigung eines Kraftfahrzeugrads 38 eines nicht näher dargestellten Kraftfahrzeugs auf einer Ladefläche 40 eines nicht näher dargestellten Lastkraftwagens. Die Gurthakeneinheiten 1a, 1b, 1b' sind jeweils als Kraftfahrzeugbefestigungsgurthakeneinheiten ausgebildet. Der Gurt 14 ist auf eine Spannkraft größer als 20 kN ausgelegt.

Die erste Gurthakeneinheit 1 b der Gurthakeneinheiten 1a, b, b' ist an einem Ende des Gurts 14 befestigt und auf einer ersten Seite des Kraftfahrzeugrads 38 mit Abstand vor dem Kraftfahrzeugrad 38 in Löcher in der Ladefläche 40 eingehängt. Die zweite Gurthakeneinheit 1b' ist auf der ersten Seite unmittelbar vor dem Kraftfahrzeugrad 38 in Löcher in der Ladefläche 40 eingehängt und die dritte Gurthakeneinheit 1 a ist auf einer zweiten Seite des Kraftfahrzeugrads 38 unmittelbar nach dem Kraftfahrzeugrad 38 in Löcher in der Ladefläche 40 eingehängt. Auf der zweiten Seite ist zudem eine nicht näher dargestellte Spanneinheit angeordnet, mittels welcher der Gurt 14 gespannt werden kann.

Die Gurthakeneinheiten 1b, 1b', die auf der der Spanneinheit abgewandten Seite des Kraftfahrzeugrades 38 angeordnet sind, sind baugleich ausgebildet, wobei sich die auf der der Spanneinheit zugewandten Seite angeordnete Gurthakeneinheit 1a von den Gurthakeneinheiten 1 b, 1b' unterscheidet.

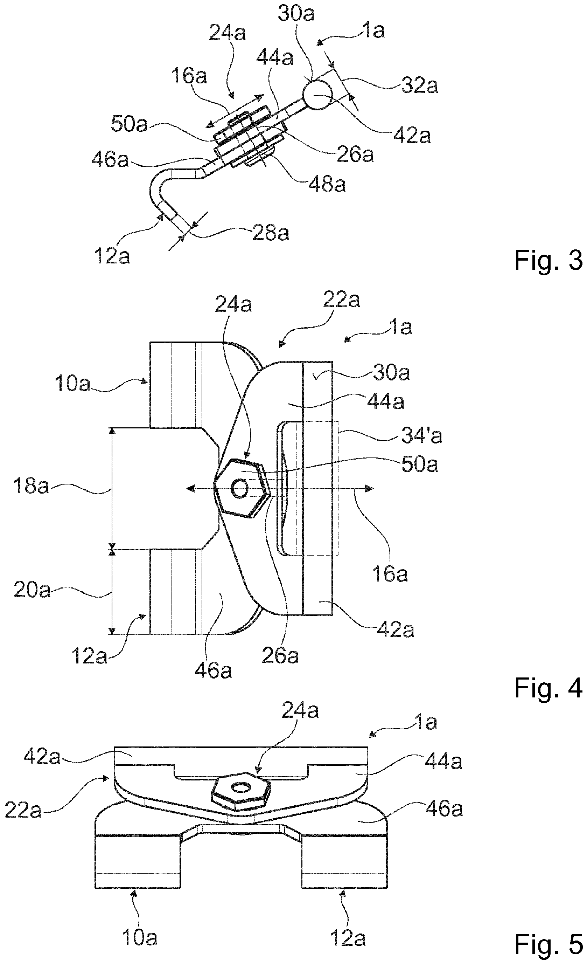

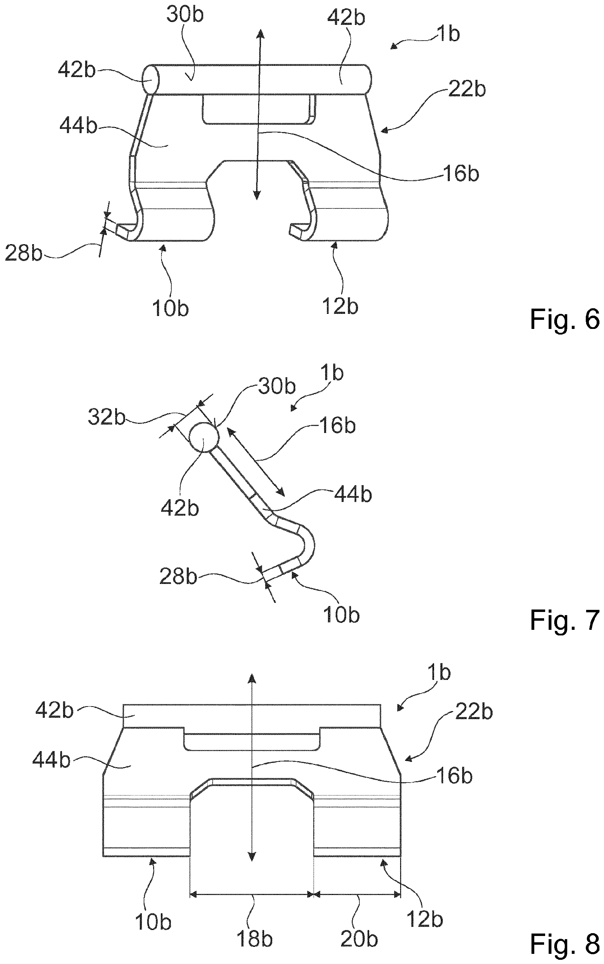

Die Gurthakeneinheiten 1 a, 1 b, 1b' weisen jeweils zwei beabstandete Haken 10a, 12a, 10b, 12b auf (vgl. Figuren 1 bis 9). Grundsätzlich wäre jedoch auch denkbar, dass die Gurthakeneinheiten 1a, 1 b, 1b' mehr als zwei Haken aufweisen, wie beispielsweise drei Haken oder vier Haken. Die Haken 10a, 12a, 10b, 12b sind, in Spannrichtung 16a, 16b betrachtet, nebeneinander angeordnet und weisen zueinander, quer zur Spannrichtung 16a, 16b, einen Abstand 18a, 18b von 50 mm und jeweils eine Breite 20 von 35 mm auf.

Die Gurthakeneinheiten 1 a, 1 b, 1b' werden jeweils zum Großteil aus einem Flachmaterial mit einer Materialstärke 28a, 28b von 4 mm gebildet. Die Gurthakeneinheiten 1 a, 1 b, 1b' werden zum Großteil von einem Stahlblech mit einem Zugfestigkeitswert von 470 N/mm². gebildet. Grundsätzlich ist jedoch auch denkbar, dass die Gurthakeneinheiten 1 a, 1 b, 1b' zumindest teilweise aus einem Kunststoff, insbesondere einem verstärkten Kunststoff gebildet sind. Zumindest einzelne Teile oder vorzugsweise auch zumindest ein Großteil der Gurthakeneinheiten kann auch durch ein 3D-Durckverfahren hergestellt sein, und zwar aus Kunststoff und/oder Metall und/oder weiteren, dem Fachmann als sinnvoll erscheinenden Materialien.

Die Gurthakeneinheiten 1a, 1 b weisen jeweils eine Gurtanbindungseinheit 22a, 22b mit einer abgerundeten, und zwar zylindrischen Gurtanlagefläche 30a, 30b auf, die einen Durchmesser 32a, 32b von 12 mm aufweist. Die Gurtanbindungseinheiten 22a, 22b weisen hierfür jeweils einen zylindrischen Bolzen 42a, 42b auf, wobei die Bolzen 42a, 42b jeweils über Schweißverbindungen mit einem Körper 44a, 44b der Gurtanbindungseinheit 22a, 22b verbunden sind.

Bei der Gurthakeneinheit 1 b sind die Gurtanbindungseinheit 22b und eine die Haken 10b, 12b ausbildende Einheit einteilig ausgebildet. Dagegen ist die Gurthakeneinheit 1 a zweiteilig ausgebildet, und zwar weist die Gurthakeneinheit 1a neben der Gurtanbindungseinheit 22a eine die Haken 10a, 10b ausbildende Einheit 46a auf. Die Gurthakeneinheit 1 a weist zudem eine Lagereinheit 24a auf, über die die Haken 10a, 12a bzw. die Einheit 46a und die Gurtanbindungseinheit 22a relativ zueinander beweglich verbunden sind. Die Lagereinheit 24a weist hierfür ein Gelenk 26a auf, über das die Gurtanbindungseinheit 22a und die Haken 10a, 12a bzw. die Einheit 46a schwenkbar verbunden sind. Das Gelenk 26a wird von einer Schraube 48a und einer Mutter 50a gebildet, über die die Gurtanbindungseinheit 22a und die Einheit 46a miteinander schwenkbar verbunden sind.

Um die Reibung zwischen Gurt 14 und Gurtanbindungseinheit 22a zu reduzieren, kann die Gurtanbindungseinheit 22a auch mit einem beweglich gelagerten Gurtanbindungselement 34a' ausgebildet sein, wie dies schematisch in Figur 2 angedeutet ist. Das Gurtanbindungselement 34a' wird hierbei von einer Hülse gebildet, die auf dem zylindrischen Bozen 42a drehbar gelagert ist. Dabei kann die Hülse vorteilhaft über ein zusätzliches Gleitlager oder über ein Wälzlager auf dem Bolzen 42a gelagert sein. Alternativ wäre auch denkbar, dass die Hülse direkt ohne weiteres Lager auf dem Bolzen 42a drehbar gelagert ist.

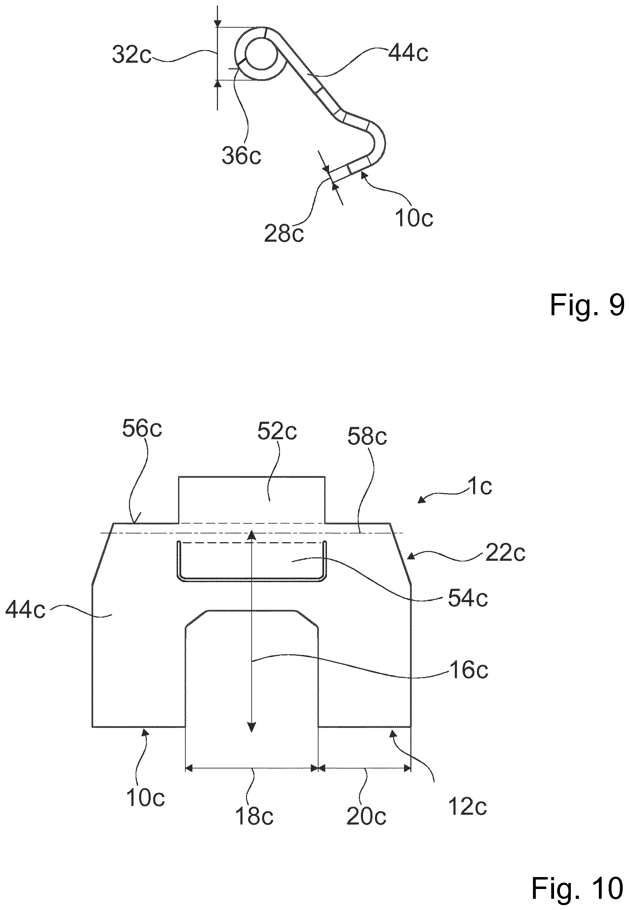

In den Figuren 9 und 10 ist ein weiteres Ausführungsbeispiel der Erfindung gezeigt, und zwar eine weitere Gurthakeneinheit 1c. Die nachfolgenden Beschreibungen beschränken sich im Wesentlichen auf die Unterschiede zu der Gurthakeneinheit 1 b, wobei bezüglich gleich bleibender Bauteile, Merkmale und Funktionen auf die Beschreibung der Gurthakeneinheit 1 b verwiesen werden kann. Zur Unterscheidung der Ausführungsbeispiele ist der Buchstabe b in den Bezugszeichen durch den Buchstaben c ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der Gurthakeneinheit 1 b verwiesen werden. Ferner können die nachfolgend näher beschriebenen Unterschiede bzw. Ausgestaltungen auch in einer, dem Fachmann sinnvoll erscheinenden Weise bei einer der Gurthakeneinheit 1 a entsprechenden Gurthakeneinheit angewandt werden. Insbesondere kann die Gurthakeneinheit 1c auch zweiteilig mit einer der Lagereinheit 24a entsprechenden Lagereinheit ausgebildet werden.

Die Gurthakeneinheit 1 c weist eine Gurtanbindungseinheit 22c auf, die eine in einem Umformprozess gebildete Gurtanlagefläche 36c aufweist. Die gesamte Gurtanbindungseinheit 22c wird von einem einteiligen Stanzbiegeblechteil gebildet, das in Figur 10 nach einem Stanzvorgang noch in einer theoretisch ebenen Form dargestellt ist. Bei dem vorliegenden Ausführungsbeispiel wird die gesamte Gurthakeneinheit 1c aus dem Stanzbiegeblechteil gebildet. Die Gurthakeneinheit 1c ist prozesstechnisch in einem sich zumindest teilweise überschneidenden Stanz- und Biegeprozess hergestellt, d.h. Herstellverfahrensschritte des Stanzens und des Biegens überschneiden sich zumindest teilweise.

Die Gurtanlagefläche 36c wird aus zwei Teilbereichen 52c, 54c gebildet. Der Teilbereich 52c steht vor einem Biegevorgang laschenartig über eine spätere Körperkante 56c hinaus, die nach dem Stanzbiegevorgang auf einer Haken 10c, 12c der Gurthakeneinheit 1c gegenüberliegenden Seite der Gurthakeneinheit 1c angeordnet ist. Der Teilbereich 54c wird beim Stanzvorgang aus einer Vollfläche des Stanzbiegeblechteils freigeschnitten. Um einen vorteilhaften Übergang, insbesondere um einen vorteilhaften abgerundeten Übergang zwischen den Teilbereichen 52c, 54c zu erzielen, ist das Stanzbiegeblechteil nach Fertigstellung (Fig. 10) in einem Materialübergangsbereich 58c, der sich in Spannrichtung 16c zwischen den Teilbereichen 52c, 54c befindet, abgerundet ausgebildet.

**Bezugszeichen**

| | | | |
|---|---|---|---|
| 1 | Gurthakeneinheit | 56 | Körperkante |
| 10 | Haken | 58 | Materialübergangsbereich |
| 12 | Haken | | |
| 14 | Gurt | | |
| 16 | Spannrichtung | | |
| 18 | Abstand | | |
| 20 | Breite | | |
| 22 | Gurtanbindungseinheit | | |
| 24 | Lagereinheit | | |
| 26 | Gelenk | | |
| 28 | Materialstärke | | |
| 30 | Gurtanlagefläche | | |
| 32 | Durchmesser | | |
| 34 | Gurtanbindungselement | | |
| 36 | Gurtanlagefläche | | |
| 38 | Kraftfahrzeugrad | | |
| 40 | Ladefläche | | |
| 42 | Bolzen | | |
| 44 | Körper | | |
| 46 | Einheit | | |
| 48 | Schraube | | |
| 50 | Mutter | | |
| 52 | Teilbereich | | |
| 54 | Teilbereich | | |

## Patentansprüche

1. Gurthakeneinheit (1a, 1b, 1b') mit zumindest zwei beabstandeten Haken (10a, 12a, 10b, 12b, 10c, 12c) zur Aufnahme von Spannkräften eines Gurtes (14).

2. Gurthakeneinheit (1a, 1b, 1b') nach Anspruch 1, **gekennzeichnet durch** die Ausbildung als Kraftfahrzeugbefestigungsgurthakeneinheit.

3. Gurthakeneinheit (1a, 1b, 1b') nach einem der vorhergehenden Ansprüche, **dadurch gekennzeichnet, dass** die Haken (10a, 12a, 10b, 12b, 10c, 12c), in Spannrichtung (16a, 16b, 16c) betrachtet, zumindest teilweise nebeneinander angeordnet sind.

4. Gurthakeneinheit (1a, 1 b, 1b') nach einem der vorhergehenden Ansprüche, **dadurch gekennzeichnet, dass** die Haken (10a, 12a, 10b, 12b, 10c, 12c) einen Abstand (18a, 18b, 18c) größer als 40 mm aufweisen.

5. Gurthakeneinheit (1a, 1 b, 1b') nach einem der vorhergehenden Ansprüche, **dadurch gekennzeichnet, dass** zumindest einer der Haken (10a, 12a, 10b, 12b, 10c, 12c) eine Breite (20a, 20b, 20c) größer als 25 mm aufweist.

6. Gurthakeneinheit (1a) nach einem der vorhergehenden Ansprüche, **gekennzeichnet durch** eine Gurtanbindungseinheit (22a) und zumindest eine Lagereinheit (24a), über die zumindest einer der Haken (10a, 12a) und die Gurtanbindungseinheit (22a) relativ zueinander beweglich verbunden sind.

7. Gurthakeneinheit (1a) nach Anspruch 6, **dadurch gekennzeichnet, dass** die Lagereinheit (24a) zumindest ein Gelenk (26a) aufweist, über das die Gurtanbindungseinheit (22a) und der zumindest eine Haken (10a, 12a) schwenkbar verbunden sind.

8. Gurthakeneinheit (1a, 1 b, 1b') nach einem der vorhergehenden Ansprüche, **gekennzeichnet durch** die Ausbildung zumindest teilweise aus einem Flachmaterial.

9. Gurthakeneinheit (1a, 1 b, 1b') nach einem der vorhergehenden Ansprüche, **gekennzeichnet durch** die Ausbildung zumindest teilweise mit einer Materialstärke (28a, 28b, 28c) größer als 2,5 mm.

10. Gurthakeneinheit (1a, 1 b, 1 b') nach einem der vorhergehenden Ansprüche, **gekennzeichnet durch** die Ausbildung zumindest teilweise aus einem Material mit einer Zugfestigkeit von zumindest 470 N/mm².

11. Gurthakeneinheit (1a, 1 b, 1 b') nach einem der vorhergehenden Ansprüche, **gekennzeichnet durch** zumindest eine Gurtanbindungseinheit (22a, 22b, 22c) mit zumindest einer zumindest teilweise abgerundeten Gurtanlagefläche (30a, 30b, 30c), die in zumindest einem Bereich einen Durchmesser (32a, 32b, 32c) größer als 11 mm aufweist.

12. Gurthakeneinheit (1a) nach einem der vorhergehenden Ansprüche, **gekennzeichnet durch** zumindest eine Gurtanbindungseinheit (22a), die ein beweglich gelagertes Gurtanbindungselement (34a') aufweist.

13. Gurthakeneinheit (1c) nach einem der vorhergehenden Ansprüche, **gekennzeichnet durch** zumindest eine Gurtanbindungseinheit (22c), die zumindest eine wenigstens teilweise in einem Umformprozess gebildete Gurtanlagefläche (36c) aufweist.

14. System mit zumindest einem Gurt (14) und zumindest einer Gurthakeneinheit (1 a, 1 b, 1b') nach einem der vorhergehenden Ansprüche.

15. System nach Anspruch 14, **dadurch gekennzeichnet, dass** der Gurt (14) auf eine Spannkraft größer als 15 kN ausgelegt ist.

16. System nach Anspruch 15, **dadurch gekennzeichnet, dass** der Gurt (14) auf eine Spannkraft größer als 20 kN ausgelegt ist.
